# EUROPÄISCHE PATENTANMELDUNG

(11) **EP 1 743 805 A1**
(43) Veröffentlichungstag der Anmeldung: **17.01.2007**
(21) Anmeldenummer: 06013574.6
(22) Anmeldetag: 30.06.2006
(51) Int. Cl.: B60R 13/04, F16B 5/12, B60R 13/02

(54) **Kunststoffleiste für eine Fahrzeugkarosserie**

(30) Priorität: 15.07.2005 DE 20511175 U
(71) Anmelder: WKW Kunststofftechnik AG, 9464 Rüthi (CH)
(72) Erfinder: Scheiffelen, Horst, 88131 Lindau (DE)
(74) Vertreter: Riebling, Peter

(57) **Zusammenfassung**

Die Erfindung betrifft eine Kunststoffleiste (1, 21) für eine Fahrzeugkarosserie, insbesondere in Funktion einer Stoßleiste, Schmutzleiste, Scheuerleiste, Zierleiste oder Übergangsleiste, bestehend aus einer karosserieseitigen Grundleiste (2) und einer, die Grundleiste (2) sichtseitig im Wesentlichen überdeckende Abdeckleiste (3), wobei Grundleiste (2) und Abdeckleiste (3) über ein Filmscharnier (4) werkstoffeinstückig miteinander verbunden sind und zueinander um dieses derart verschwenkbar sind, dass diese über eine Rasteinrichtung (11) miteinander verrastbar sind, wobei im Querspalt (18) zwischen der Grundleiste (2) und der Abdeckleiste (3) Stützrippen (5, 6, 7, 8) vorgesehen sind, die eine unzulässige Relativbewegung der Abdeckleiste (3) zur Grundleiste (2) bei äußerer Krafteinwirkung verhindern, so dass die Rasteinrichtung (11) zwischen Grundleiste (2) und Abdeckleiste (3) geschlossen bleibt. Vorteil dabei ist, dass die erfindungsgemäße Kunststoffleiste für eine Fahrzeugkarosserie eine wesentlich höhere Stabilität im Benutzungszustand aufweist, jedoch nicht oder nicht wesentlich teurer und schwerer ist, als beim Stand der Technik.

## Beschreibung

Die Erfindung betrifft eine Kunststoffleiste für eine Fahrzeugkarosserie nach dem Oberbegriff des unabhängigen Patentanspruchs 1, die als Stoßleiste, Schmutzleiste, Scheuerleiste oder Zierleiste wirken kann, oder auch als Übergangsleiste zwischen zwei Karosseriebauteilen des Fahrzeugs.

Derartige Leisten für Fahrzeuge sind zahlreich aus dem Stand der Technik bekannt, so z.B. aus der EP 419072 B1 und der US 4,308,704, denen beiden gemeinsam ist, dass eine Grundleiste vorgesehen ist, die über Befestigungsmittel (z.B. Schrauben, Niete) an der Karosserie des Fahrzeugs befestigt wird, und anschließend die Sichtseite der Befestigungsmittel mittels einer Abdeckleiste überdeckt werden. Um die Montage zu erleichtern und zu beschleunigen, sind die karosserieseitige Grundleiste und die darüber liegende Abdeckleiste an ihrer einen Längsseite über ein Filmscharnier miteinander gelenkig verschwenkbar verbunden und auf ihrer anderen Längsseite über eine Rasteinrichtung der Leiste miteinander verrastbar.

Nachteil dieser Leisten für Fahrzeuge ist jedoch, dass bei einer äußeren Krafteinwirkung im Benutzungszustand der Leiste eine Verformung der Abdeckleiste derart möglich ist, dass der relativ große Querspalt zwischen Grundleiste und Abdeckleiste verengt wird und somit ein Öffnen und Beschädigen der Verrastung ermöglicht wird, sowie eine Beschädigung der Abdeckleiste durch plastische Verformung oder gar Bruch.

Aufgabe der vorliegenden Erfindung ist es daher, eine Kunststoffleiste für eine Fahrzeugkarosserie bereit zu stellen, die eine wesentlich höhere Stabilität im Benutzungszustand aufweist, jedoch nicht oder nicht wesentlich teurer und schwerer ist.

Zur **Lösung** der gestellten Aufgabe dienen die Merkmale des unabhängigen Patentanspruches 1.

Wesentliches Merkmal dabei ist, dass im Querspalt zwischen der Grundleiste und der Abdeckleiste Stützrippen vorgesehen sind, die eine unzulässige Relativbewegung der Abdeckleiste zur Grundleiste bei äußerer Krafteinwirkung verhindern, so dass die Rasteinrichtung zwischen Grundleiste und Abdeckleiste geschlossen bleibt.

Vorteil der Stützrippen ist, dass im Benutzungszustand der Kunststoffleiste eine unzulässige Relativbewegung der Abdeckleiste zur Grundleiste quer und/oder längs und/oder schräg zur Längserstreckung der Kunststoffleiste zuverlässig vermieden wird. Einerseits wird mit den Stützrippen eine Annäherung der Abdeckleiste zur Grundleiste hin (quer zur Längserstreckung der Kunststoffleiste) und damit eine Verringerung des Querspalts zwischen Abdeckleiste und Grundleiste nur in einem vordefinierten Bereich ermöglicht. Andererseits wird mit den Stützrippen eine unzulässige Scherbewegung der Abdeckleiste zur Grundleiste (längs zur Längserstreckung der Kunststoffleiste) vermieden und damit eine Beschädigung des Filmscharniers, welches die Abdeckleiste und die Grundleiste miteinander stabilisierend verbindet. Weiterer Vorteil der Stützrippen der erfindungsgemäßen Kunststoffleiste ist, dass damit auf eine ansonsten übliche zusätzliche Verklebung der Kunststoffleiste mit der Fahrzeugkarosserie verzichtet werden kann, was zu einer Reduzierung der Montagekosten führt.

Die Stützrippen können dabei auf der Innenseite der Grundleiste und/oder auf der Innenseite der Abdeckleiste angeordnet sein, innerhalb des Querspaltes der montierten Kunststoffleiste.

In einer anderen Ausführung der Erfindung sind die Stützrippen auf einer separaten Zwischenleiste ausgebildet sind, wobei die Zwischenleiste über ein weiteres Filmscharnier mit der Grundleiste und/oder der Abdeckleiste verbunden ist und in den Querspalt hinein verschwenkt werden kann.

Die Stützrippen können in beiden Ausführungen in zugeordneten vorspringenden Führungen oder in Ausnehmungen (insbesondere Durchbrüchen) des gegenüberliegenden Bauteils (Grundleiste und/oder Abdeckleiste) quer und/oder längs und/oder schräg zur Längserstreckung der Kunststoffleiste geführt sein.

Die Ausrichtung der Stützrippen ist daher in Richtung der Längserstreckung der Grundleiste/Abdeckleiste und/oder quer zur Längserstreckung Grundleiste/Abdeckleiste und/oder schräg zur Längserstreckung der Grundleiste/Abdeckleiste. Bevorzugt wird aber eine Ausrichtung der Stützrippen in Richtung oder quer (horizontal/vertikal) der Längserstreckung der Grundleiste/Abdeckleiste. Insbesondere sind aus fertigungstechnischen Gesichtspunkten die Stützrippen kreuzförmig ausgebildet, mit je Stützrippen-Kreuz mindestens einer ersten Rippe in Richtung der Längserstreckung der Kunststoffleiste und mindestens einer zweiten Rippe quer vertikal (in Hochachse) zur Längserstreckung der Kunststoffleiste.

In einer bevorzugten Variante sind einige Stützrippen querverlaufend auf der Abdeckleiste angeordnet und greifen in zugeordnete Ausnehmungen auf der Grundleiste formschlüssig ein, so dass eine Relativbewegung zwischen Grundleiste und Abdeckleiste in Richtung Längserstreckung der Kunststoffleiste im Wesentlichen verhindert wird. Dies dient der mechanischen Entlastung des Filmscharniers. In der selben bevorzugten Variante sind andere Stützrippen längsverlaufend auf der Grundleiste angeordnet und greifen in zugeordnete Ausnehmungen auf der Abdeckleiste formschlüssig ein, so dass eine Relativbewegung zwischen Grundleiste und Abdeckleiste quer zur Längserstreckung der Kunststoffleiste im Wesentlichen verhindert wird. Insbesondere greifen dabei die längsverlaufenden Stützrippen in eine nach außen von der Fahrzeugkarosserie weg ausgebuchtete, konvexe Abknickung/Ausbuchtung der Abdeckleiste ein und legen sich dort bevorzugt formschlüssig an, so dass auch eine Relativbewegung zwischen Grundleiste und Abdeckleiste in der Hochachse der Kunststoffleiste im Wesentlichen verhindert wird.

Die Stützrippen können über eine längere Strecke durchgehend vorgesehen sein oder aber unterbrochen und z.B. alle 150 mm in Richtung der Längserstreckung der Kunststoffleiste vorgesehen sein, was auch dem Abstand der Befestigungsmittel entspricht.

Insbesondere besitzen die Grundleiste und die Abdeckleiste die gleiche Länge, jedoch kann in einer anderen Ausführung der Erfindung die Grundleiste kürzer sein oder aber unterbrochen sein und aus zahlreichen kurzen Abschnitten in Richtung der Längserstreckung der Kunststoffleiste bestehen. Gleiches gilt für das die Grundleiste und die Abdeckleiste verbindende Filmscharnier.

Die Grundleiste und/oder die Abdeckleiste können zusätzlich adhäsiv z.B. über ein Klebeband mit der Karosserie verbunden werden, um die Verbindung der Kunststoffleiste zur Karosserie weiter zu stabilisieren und auch um eine Abdichtung der Kunststoffleiste zur Karosserie zu erreichen.

Im Folgenden wird die Erfindung anhand von mehrere Ausführungswege darstellende Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Eine perspektivische Darstellung der erfindungsgemäßen Kunststoffleiste in einer ersten Ausführung mit integriertem Positionier-Pin in aufgeklappter Werkzeuglage;
Figur 2: Darstellung nach Figur 1, jedoch in eingeklappter Benutzungslage;
Figur 3: Queransicht im Teilschnitt der erfindungsgemäßen Kunststoffleiste nach Figuren 1 und 2;
Figur 4: Eine perspektivische Darstellung der erfindungsgemäßen Kunststoffleiste in einer zweiten Ausführung mit separater Clip-Befestigungsmöglichkeit in aufgeklappter Werkzeuglage;
Figur 5: Darstellung nach Figur 4, jedoch in eingeklappter Benutzungslage;
Figur 6: Darstellung nach Figur 5 mit Befestigungs-Clip.

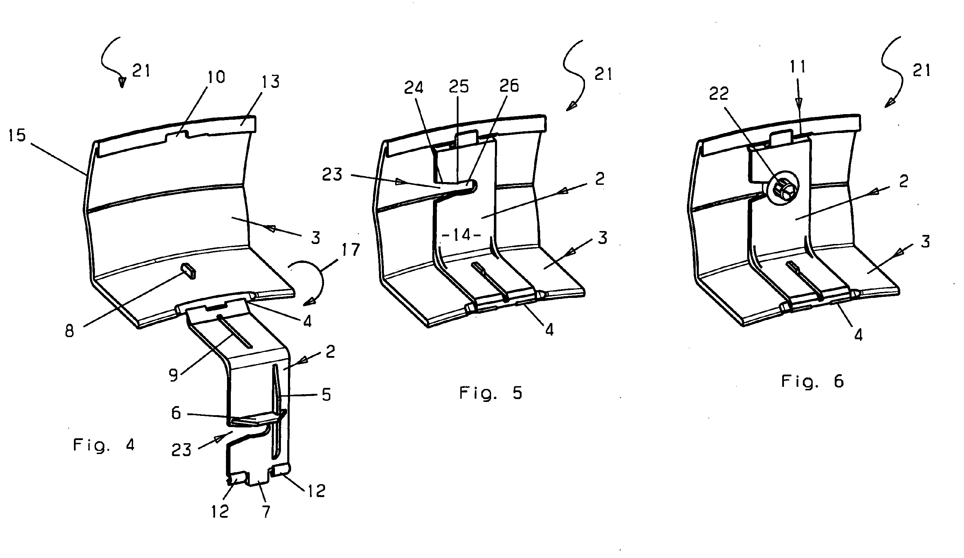

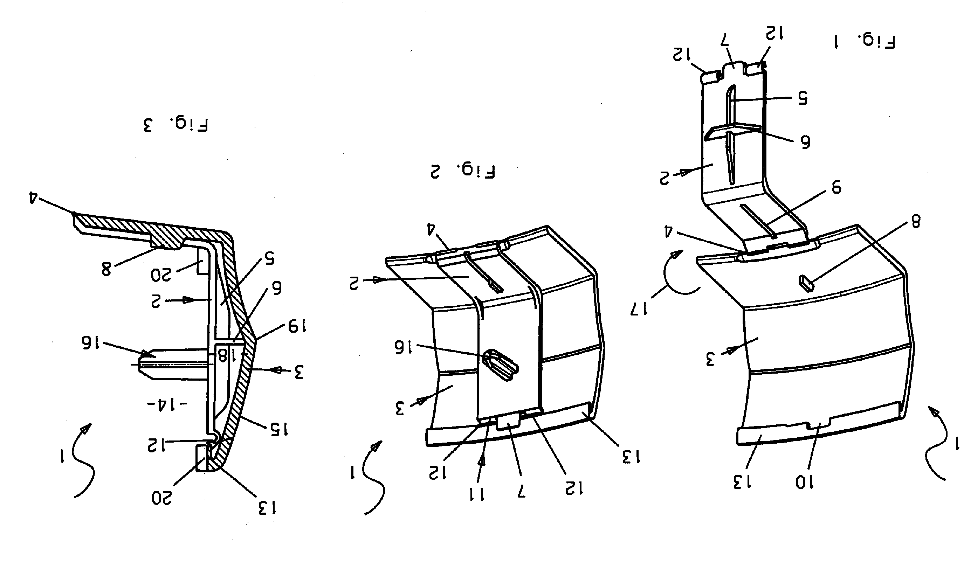

In den Figuren 1-3 ist erste Ausführung mit integriertem Positionier-Pin 16 dargestellt, in den Figuren 4-6 eine zweiten Ausführung mit separater Clip-Befestigung 22, 23. Der Unterschied liegt im Befestigungsmittel der Kunststoffleiste 1, 21 zur Fahrzeugkarosserie (nicht dargestellt), nämlich einmal über einen werkstoffeinstückigen Pin 16 (Figuren 1-3) und einmal über einen von der Kunststoffleiste 21 getrennt hergestellten Clip 22 (Figuren 4-6), der nachträglich an der Kunststoffleiste 21 montiert wird.

Die Kunststoffleiste 1, 21 aller Figuren beinhaltet eine Grundleiste 2, die über ein Filmscharnier 4 mit der Abdeckleiste 3 gelenkig verschwenkbar verbunden ist, wobei die gesamte Kunststoffleiste 1, 21 aus einem beliebigen Kunststoff besteht, der in einem Fertigungsgang im Spritzguß-, Extruder- oder Gießverfahren herstellbar ist. Die Kunststoffleiste 1, 21 der Figuren 1-6 ist in ihren Proportionen völlig frei wählbar, so dass diese kürzer, aber auch wesentlich länger ausgeführt sein kann, wobei die Grundleiste 2 aus mehreren miteinander verbundenen oder unverbundenen Laschen von bestehen kann, oder aber aus einer in Längsrichtung durchgehenden Kunststoffleiste, ähnliche wie die Abdeckleiste 3.

In Figur 1 den Figuren 1-3 sind sowohl Stützrippen 5, 6, 7 auf der Grundleiste 2 vorgesehen, als auch Stützrippen 8 auf der Abdeckleiste 3. Die Stützrippen 5, 6 der Grundleiste 2 sind dabei derart als Kreuz ausgebildet, so dass sich die Rippen etwa symmetrisch überkreuzen. Die Stützrippen 5 und 8 sind quer zur Längserstreckung der Kunststoffleiste 1 orientiert, die Stützrippen 6 und 7 in Richtung der Längserstreckung der Kunststoffleiste 1.

Die Stützrippe 8 der Abdeckleiste 3 greift in der Benutzungslage nach Figur 2 in eine dazu passende Quernut 9 formschlüssig ein, welche das Material der Grundleiste 2 durchbricht. Die Stützrippe 7 greift in eine randseitige Öffnung 10 einer Hinterschneidungskante 13 der Abdeckleiste 3 ein. Damit wird eine Relativbewegung Grundleiste/Abdeckleiste in Richtung Längserstreckung im Wesentlichen verhindert wird, was der mechanischen Entlastung des Filmscharniers dient.

Um von der Werkzeuglage nach Figur 1 in die Benutzungslage nach Figur 2 zu gelangen, wird nach der Montage der Grundleiste 2 über den daran stoffschlüssig befestigten Pin 16 an der Fahrzeugkarosserie, die Abdeckleiste 3 in der Schwenkrichtung 17 um die Achse des Filmscharniers 4 herum auf die Grundleiste 2 verschwenkt, bis die Rasteinrichtung 11 zwischen Grundleiste 2 und Abdeckleiste 3 die beiden Bauteile aneinander insbesondere nicht lösbar sichert. Die Rasteinrichtung 11 besteht aus Haken 12 an der Grundleiste 2, die an der Hinterschneidungskante 13 auf der Rückseite 14 (gegenüber der Sichtseite 15) der Grundleiste 2 rastend zur Anlage kommt.

In Figur 3 ist erkennbar, dass die sich innerhalb des Querspalts 18 zwischen Grundleiste 2 und Abdeckleiste 3 quer erstreckende Stützrippe 6 auf einer Ausbuchtung 19 der Abdeckleiste 3 nach außen hin Richtung Sichtseite 15 anliegt. Damit wird eine Relativbewegung Grundleiste/Abdeckleiste quer zur Längserstreckung im Wesentlichen verhindert, was der mechanischen Entlastung der Rasteinrichtung 11 und der Abdeckleiste 3 dient.

Auf der Rückseite 14 der Hinterschneidungskante 13 der Abdeckleiste 3, sowie auf der Rückseite 14 der Grundleiste 2 in der Nähe des Filmscharniers 4 kann je ein Klebestreifen 20 vorhanden sein.

Die Figuren 4-6 zeigen eine zu den Figuren 1-3 sehr ähnliche Ausführung der Erfindung in Form der Kunststoffleiste 21, jedoch ist der angegossene Pin 16 der Figuren 1-3 ersetzt durch einen nachträglich eingebrachten Clip 22, der in eine randseitig offene Ausnehmung 23 in der Grundleiste 2 rastend eingeschoben wird. Für die Rastung des Pin 16 in der Grundleiste 2 weist die Ausnehmung 23 einen ersten Einführbereich 24 auf, der über einen Übergang 25 in ein Langloch 26 übergeht. Der Übergang 25 besitzt einen geringeren Durchmesser als der Außendurchmesser des Pin 22, so dass hier ein Widerstand überwunden werden muss, bevor der Pin 22 in das Langloch 26 mit größerem Durchmesser rastend fällt. Das Überwinden des Übergangs 25 wird durch die Federwirkung der randseitigen Öffnung der Ausnehmung 23 ermöglicht.

Das Kreuz der Stützrippen 5 und 6 ist in dieser Ausführung nicht symmetrisch, sondern die Stützrippe 5 ist leicht seitlich verschoben zur Mitte und die Stützrippe 6 befindet sich am Rand der Ausnehmung 23 für den Clip 22 zur Stabilisierung der Ausnehmung 23.

Alle übrigen Bauteile sind in den beiden Ausführungen nach Figuren 1-3 und Figuren 4-6 identisch, so dass auf die Beschreibung der Figuren 1-3 verwiesen werden kann.

Erfindungsgemäß sind also im Querspalt 18 zwischen der Grundleiste 2 und der Abdeckleiste 3 Stützrippen 5, 6, 7, 8 vorgesehen, die eine unzulässige Relativbewegung der Abdeckleiste 3 zur Grundleiste 2 bei äußerer Krafteinwirkung verhindern, so dass die Rasteinrichtung 11 zwischen Grundleiste 2 und Abdeckleiste 3 geschlossen bleibt und keine Beschädigung der Kunststoffleiste erfolgt. Vorteil dabei ist, dass die erfindungsgemäße Kunststoffleiste für eine Fahrzeugkarosserie eine wesentlich höhere Stabilität im Benutzungszustand aufweist, jedoch nicht oder nicht wesentlich teurer und schwerer ist, als beim Stand der Technik.

### Legende

- 1.: Kunststoffleiste
- 2.: Grundleiste
- 3.: Abdeckleiste
- 4.: Filmscharnier
- 5.: Stützrippen
- 6.: Stützrippen
- 7.: Stützrippen
- 8.: Stützrippen
- 9.: Quernut für 8
- 10.: randseitige Öffnung in 13 für 7
- 11.: Rasteinrichtung zwischen 2 und 3
- 12.: Haken von 11 auf 2
- 13.: Hinterschneidungskante von 11 auf 3
- 14.: Rückseite von 1 und 21
- 15.: Sichtseite von 1 und 21
- 16.: Befestigungs-Pin auf 1
- 17.: Schwenkrichtung um 4
- 18.: Querspalt zwischen 2 und 3
- 19.: Ausbuchtung von 3
- 20.: Klebestreifen auf 14 von 2 und 3
- 21.: Kunststoffleiste
- 22.: Befestigungs-Clip für 21
- 23.: Ausnehmung in 2 für 22
- 24.: Einführbereich von 23 für 22
- 25.: Übergang von 23 für 22
- 26.: Langloch von 23 für 22

## Patentansprüche

1. Kunststoffleiste (1, 21) für eine Fahrzeugkarosserie, insbesondere in Funktion einer Stoßleiste, Schmutzleiste, Scheuerleiste, Zierleiste oder Übergangsleiste, bestehend aus einer karosserieseitigen Grundleiste (2) und einer, die Grundleiste (2) sichtseitig im Wesentlichen überdeckende Abdeckleiste (3), wobei Grundleiste (2) und Abdeckleiste (3) über ein Filmscharnier (4) werkstoffeinstückig miteinander verbunden sind und zueinander um dieses derart verschwenkbar sind, dass diese über eine Rasteinrichtung (11) miteinander verrastbar sind, **dadurch gekennzeichnet, dass** im Querspalt (18) zwischen der Grundleiste (2) und der Abdeckleiste (3) Stützrippen (5, 6, 7, 8) vorgesehen sind, die eine unzulässige Relativbewegung der Abdeckleiste (3) zur Grundleiste (2) bei äußerer Krafteinwirkung verhindern, so dass die Rasteinrichtung (11) zwischen Grundleiste (2) und Abdeckleiste (3) geschlossen bleibt.

2. Kunststoffleiste (1, 21) nach Anspruch 1, **dadurch gekennzeichnet, dass** die Grundleiste (2) über Befestigungsmittel (16, 22) mit der Fahrzeugkarosserie verbindbar ist.

3. Kunststoffleiste (1, 21) nach Anspruch 2, **dadurch gekennzeichnet, dass** die Befestigungsmittel (16, 22) als Pin (16) stoffschlüssig mit der Grundleiste (2) verbunden sind und aus dem gleichen Kunststoff bestehen, und/oder als Clip (22) als separate Bauteile ausgebildet und mit der Grundleiste (2) verbindbar sind, wobei die Clips (22) aus dem gleichen oder einem anderen Kunststoff bestehen, und/oder aus einem Metallmaterial bestehen.

4. Kunststoffleiste (1, 21) nach einem der Ansprüche 1 bis 3, **dadurch gekennzeichnet, dass** die Stützrippen (5-8) auf der Innenseite der Grundleiste (2) und/oder auf der Innenseite der Abdeckleiste (3) angeordnet sind.

5. Kunststoffleiste (1, 21) nach einem der Ansprüche 1 bis 3, **dadurch gekennzeichnet, dass** die Stützrippen (5-8) auf einer separaten Zwischenleiste ausgebildet sind, welche über ein weiteres Filmscharnier mit der Grundleiste (2) und/oder der Abdeckleiste (3) verbunden ist und in den Querspalt (18) zwischen Grundleiste (2) und Abdeckleiste (3) hinein verschwenkbar ist.

6. Kunststoffleiste (1, 21) nach einem der Ansprüche 1 bis 5, **dadurch gekennzeichnet, dass** die Stützrippen (5-8) in zugeordneten vorspringenden Führungen (19) oder in Ausnehmungen, insbesondere Durchbrüchen (9) des gegenüberliegenden Bauteils, nämlich der Grundleiste (2) und/oder der Abdeckleiste (3), quer und/oder längs und/oder schräg zur Längserstreckung der Kunststoffleiste (1, 21) geführt sind.

7. Kunststoffleiste (1, 21) nach einem der Ansprüche 1 bis 6, **dadurch gekennzeichnet, dass** die Stützrippen (5, 6) sich mindestens teilweise überkreuzend ausgebildet sind.

8. Kunststoffleiste (1, 21) nach Anspruch 7, **dadurch gekennzeichnet, dass** die sich überkreuzenden Stützrippen (5, 6) je mit mindestens einer ersten Rippe (6) in Richtung der Längserstreckung der Kunststoffleiste (1, 21) und mindestens einer zweiten Rippe (5) quer vertikal zur Längserstreckung der Kunststoffleiste (1, 21), sich in Richtung der Hochachse der Kunststoffleiste (1, 21) erstreckend, ausgebildet sind.

9. Kunststoffleiste (1, 21) nach einem der Ansprüche 1 bis 8, **dadurch gekennzeichnet, dass** mindestens eine längsverlaufende Stützrippe (6) in mindestens eine nach außen von der Fahrzeugkarosserie weg ausgebuchtete längsverlaufende Abknickung/Ausbuchtung (19) der Abdeckleiste (3) eingreift und sich dort formschlüssig anlegt.

10. Kunststoffleiste (1, 21) nach einem der Ansprüche 1 bis 6, **dadurch gekennzeichnet, dass** die Stützrippen (5-8) im Wesentlichen dort positioniert sind, wo auch die Befestigungsmittel (16, 22) vorhanden sind, also beispielsweise etwa alle 150 mm in Richtung der Längserstreckung der Kunststoffleiste (1, 21).

11. Kunststoffleiste (1, 21) nach einem der Ansprüche 1 bis 10, **dadurch gekennzeichnet, dass** die Abdeckleiste (3), die Grundleiste (2) und das Filmscharnier (4) die gleiche Länge in Richtung der Längserstreckung der Kunststoffleiste (1, 21) besitzen.

12. Kunststoffleiste (1, 21) nach Anspruch 11, **dadurch gekennzeichnet, dass** die sich in Richtung der Längserstreckung der Kunststoffleiste (1, 21) erstreckenden Stützrippen (6) etwa über die gesamte Länge der Kunststoffleiste (1, 21) vorgesehen sind.

13. Kunststoffleiste (1, 21) nach einem der Ansprüche 1 bis 10, **dadurch gekennzeichnet, dass** die Grundleiste (2) und das Filmscharnier (4) kürzer sind als die Abdeckleiste (3) und nur in Form von zahlreichen kurzen Abschnitten/Streifen, in Richtung der Längserstreckung der Kunststoffleiste (1, 21) gesehen, ausgeführt sind.

14. Kunststoffleiste (1, 21) nach einem der Ansprüche 1 bis 13, **dadurch gekennzeichnet, dass** die Grundleiste (2) und/oder die Abdeckleiste (3) zusätzlich adhäsiv z.B. über ein Klebeband (20) mit der Karosserie verbindbar sind.
